# EUROPEAN PATENT APPLICATION

(11) **EP 4 478 549 A1**
(43) Date of publication of application: **18.12.2024**
(21) Application number: 24181849.1
(22) Date of filing: 13.06.2024
(51) Int. Cl.: H01R 4/30, H01R 9/22, H01M 50/543, H01R 11/26, H01R 13/44

(54) **HOUSING ASSEMBLY FOR A MODULE CONNECTOR WITH A PRE-LOCKED SCREW**

(30) Priority: 15.06.2023 DE 102023115674
(71) Applicant: TE Connectivity Solutions GmbH, 8200 Schaffhausen (CH)
(72) Inventor: EHEIM, Manuel, 8200 Schaffhausen (CH); WOLF, Marcus, 8200 Schaffhausen (CH); HOFFMANN, Bjoern, 8200 Schaffhausen (CH); HUBER, Jens, 8200 Schaffhausen (CH); DISTLER, Patrick, 8200 Schaffhausen (CH); WEBER, Alexander, 8200 Schaffhausen (CH)
(74) Representative: Grünecker Patent- und Rechtsanwälte PartG mbB

(57) **Abstract**

The invention relates to a housing assembly (1) protected against contact for a module connector, with a housing (4) which comprises a passage opening (12) extending through the housing (4) in a direction of connection (16), and with a screw (6) with a screw head (24) arranged in the passage opening, where the screw is locked in the passage opening in a pre-assembly position (96). Such a housing assembly can be assembled quickly and in a simple manner and at the same time is completely protected against contact.

## Description

The present invention relates to a housing assembly for a module connector.

Module connectors are used, for example, to connect electrical modules, such as battery cells of batteries, in particular drive batteries of vehicles, to one another in an electrically conductive manner. In order to connect the current-carrying components of the electrical modules to one another in an electrically conductive manner, module connectors typically comprise a screw or other fastening devices. Module connectors can also be used to electrically connect consumers, fuses, or BDUs.

For assembly, an interface of the module connector is aligned relative to an interface of the electrical module. The module connector and the module are thereafter screwed together. This alignment and assembly can be quite time consuming.

The present invention is therefore based on the object of providing a housing assembly for a module connector that can be assembled quickly and in a simple manner. At the same time, the housing assembly is to be completely protected against contact.

This object is satisfied by a housing assembly protected against contact for a module connector,
with a housing which comprises a passage opening extending through the housing in a direction of connection, and
with a screw having a screw head, the screw being arranged in the passage opening,
where the screw is locked in the passage opening in a pre-assembly position.

Before the module connector is assembled with an electrical module, the housing assembly is aligned relative to a housing of the electrical module to be connected. During alignment, the housing of the housing assembly of the module user is there displaced relative to the housing of the electrical module to be connected until the longitudinal axes of the two housings are aligned or the screw can be inserted through all of the parts to be connected to one another. For alignment, the screw of the housing assembly according to the invention is locked in the passage opening in a pre-assembly position. This means that the screw is fastened in the housing - in particular in a captive manner - which simplifies assembly.

The invention can be further improved by the following features which are advantageous by themselves and which can be combined with one another at random.

For example, it is advantageous to have the screw or screw shank not protrude from the housing in the pre-assembly position. This will prevent damage to other parts when the module connector is finally assembled. Since the screw or screw shank does not protrude from the housing, it cannot scratch other parts when aligning the screw.

According to an advantageous embodiment, the screw head can comprise a screw flange and can be configured to be protected against contact, and the screw head can be locked in the passage opening. The screw flange or the insulating material of the screw flange can be part of the protection against contact of the housing assembly, i.e. be made of electrically insulating material. By locking the screw head in the passage opening, the screw is secured in a captive manner to the housing. In particular, it is prevented that the screw moves along its longitudinal axis during assembly and obstructs the alignment of the housing relative to a housing of an electrical module to be connected. A screw flange is advantageous in that it bridges a gap between the screw or the screw head and the passage opening which has a larger diameter than the screw. This configuration is a structurally simple way to realize a lock between the screw head and the passage opening.

According to a further aspect, the passage opening can be closed by the screw flange - in particular in a manner protected against contact. This configuration prevents objects or human fingers from being inserted into the passage opening of the housing assembly from the outside and thus coming into contact with current-carrying components of the module connector. Such a housing assembly consequently increases application safety. Furthermore, the ingress of dirt is prevented, which could impair the functionality and safety of the module connector.

According to a further embodiment, the screw head can be disposed in the pre-assembly position at one end of the passage opening and a screw shank of the screw can extend through the passage opening or be disposed in the passage opening. At the end of the through hole, the screw is in the maximum retracted position. The passage opening is therefore closed at the very top so that no dirt can accumulate.

In particular, the screw flange can be disposed at one end of the passage opening and the screw head can protrude from the passage opening. The housing assembly according to this embodiment is particularly easy to assemble because the screw head is easily accessible to human hands or tools.

According to a further embodiment, the passage opening can comprise a locking projection that projects in the radial direction inwardly. Such a locking projection represents a structurally simple and therefore inexpensive way of locking the screw in the passage opening.

According to a further advantageous embodiment, the at least one locking projection can be formed by a locking tongue which can be resiliently deflected in the radial direction. As a result, the lock between the screw and the passage opening created by way of the locking tongue is configured to be releasable. This is advantageous if the screw has to be transferred from the pre-assembly position to an assembly position. For this purpose, the screw can be pressed along its longitudinal axis into the passage opening of the housing assembly. As a result, the at least one locking tongue is deflected in the radial direction outwardly and the lock is released. After the lock has been released, the locking tongues can also snap back in the radial direction inwardly to their starting position due to their resilience. Such a configuration is reversible so that the pre-assembly position of the screw can be established again even after the lock has been released.

A foot of the locking tongue, which can extend away from the foot in the direction of connection, can be connected to a wall of the passage opening. The connection can in particular be configured to be monolithic. Furthermore, a free end of the locking tongue can comprise a locking tab and the locking tongue can be arranged in a recess in the wall.

According to a further aspect, the passage opening can comprise a wall that comprises a pocket which is offset in the radial direction outwardly and in which locking projections are received. The wall or the passage opening can be substantially cylindrical. The pockets ensure that the locking projections cannot be touched by objects or hands from the outside and then be damaged. In particular, the locking projections are prevented from breaking off.

According to a further advantageous embodiment, the housing can comprise a collar which surrounds the passage opening and projects on the side of the housing facing away from the screw head, and where the screw does not protrude from the collar in the pre-assembly position. By use of such a collar, the housing assembly can be aligned relative to an electrical module and plugged together before the housing assembly is screwed to the electrical module. The collar can be, for example, inserted into or placed onto a collar of the electrical module that is configured to be complementary. By having the screw not protrude from the collar of the housing assembly in the pre-assembly position, an end of the screw facing away from the screw head is prevented from coming into contact with the mating contact of the electrical module during alignment. This prevents damage to the mating contact of the electrical module.

A contact ring into which the screw at least protrudes can be received in the housing. The screw can also protrude through the contact ring or, in particular, not protrude from the contact ring. Preferably, the contact ring can be received in the passage opening or in the collar of the passage opening. The contact ring can be displaceable in the receptacle for a bus bar, in particular to establish contact between the bus bar and the contact ring.

According to a further advantageous embodiment, at least two locking projections disposed diametrically opposite one another with respect to the direction of connection can be present. If a screw locked to the housing by way of the locking projections is loaded along its longitudinal axis, then the forces must be absorbed by the locking projections. Arranging the locking projections symmetrically relative to the direction of connection ensures that the screw does not cant when loaded in the longitudinal direction. This makes assembly easier because the screw thread is prevented from canting in the complementary internal thread of the electrical module. Furthermore, it is ensured that the lock of the screw does not come loose on one side or both sides.

According to a further aspect, the housing assembly can comprise an outer housing in which the housing is received to be displaceable in at least one direction of displacement that is disposed in a plane perpendicular to the direction of connection. Due to the displaceability of the housing relative to the outer housing, the screw is likewise displaceable in the plane perpendicular to the direction of connection. This allows positional tolerances to be compensated for when connecting electrical modules. The connection of electrical modules is therefore force-free, which reduces the mechanical load on the module connector and the electrical modules.

The housing can be held in the direction of connection substantially firmly or immovably in the outer housing.

According to a further embodiment, two locking projections disposed diametrically opposite one another can be spaced from one another in the direction of displacement. In particular, the locking projections and the center of the passage opening can be disposed on a connecting line.

In order to move the housing together with the screw along the direction of displacement during alignment, a user typically exerts a force in the region of the screw head. This force can tilt the screw in the housing perpendicular to the direction of displacement, making alignment difficult. Due to the special arrangement of the locking projections, the connecting line of which extends along the direction of displacement or perpendicular to the axis of rotation, respectively, tilting of the screw during the displacement motion can be prevented.

According to a further embodiment, the outer housing can comprise a bus bar receptacle in which a bus bar can be received substantially perpendicular to the direction of connection, where the bus bar receptacle penetrates the passage opening. By providing a bus bar receptacle, the housing assembly can be used to connect electrical modules that have a bus bar. Such a housing assembly can therefore be used in a flexible manner.

The housing assembly can comprise a bus bar, where the bus bar can extend through the passage opening perpendicular to the direction of connection. The bus bar can have an insertion opening through which the screw can protrude. The insertion opening can be a long hole that can extend in the direction of displacement. The housing, together with the screw, can be displaceable in the direction of displacement relative to the bus bar.

According to a further advantageous embodiment, the housing can comprise a collar through which the passage opening extends. In particular, the collar can form the end of the passage opening. The collar provides the advantage that a complementary housing member of an electrical module to be connected can be aligned at the collar and plugged together therewith. This makes assembly easier. Furthermore, the collar can surround current-carrying components of the housing assembly, such as a contact ring, and thereby contribute to the protection against contact.

Furthermore, the housing can comprise at least one flange section which can extend along a plane that runs substantially perpendicular to the direction of connection or in the direction of displacement. The flange section can surround the passage opening and/or run parallel to a plane extending perpendicular to the direction of connection. The flange section can be longer in the direction of displacement than transverse to the direction of displacement. Furthermore, the collar can end at the flange section.

The flange sections can be planar and the flange sections can each abut in a displaceable manner against a housing section of the outer housing which respectively forms a displacement opening. A flange section there closes the displacement opening at least in part, but preferably completely. In particular, the flange section closes the displacement opening in every position of the housing relative to the outer housing. In this way, the protection against contact of the housing assembly is ensured in every position of the housing relative to the outer housing.

Each flange section can close a displacement opening - in particular in every position of the housing that is displaced in the direction of displacement relative to the outer housing. The displacement opening can be disposed between the collar and the edge of the passage opening.

The housing can also comprise two flanges spaced from one another in the direction of connection. The flanges can be connected to one another by the wall of the passage opening.

According to a further advantageous embodiment, the screw head can be locked in the collar. By locking the screw head in the collar, the screw is connected to the collar in a motion-transmitting manner. The screw can be aligned in this way without the screw having to move relative to the housing.

The housing assembly can comprise a second housing which can be plugged together with the housing and/or with the outer housing to receive a second bus bar and in which a collar that is formed to be complementary to the passage opening can be configured. A second contact ring can be received in the collar that is formed to be complementary.

In a state in which the housing and/or the outer housing are plugged together ready for operation, the screw can protrude through the contact ring. In particular, the screw can also protrude through the second bus bar in this state.

In the state in which the housing and/or the outer housing and the second housing are plugged together ready for operation, the contact ring and the second contact ring can lie on top of one another in an electrically conductive manner. In particular, the bus bar and the second bus bar can be connected to one another in an electrically conductive manner by way of the contact ring and the second contact ring. The screw can be part of a screw connection that generates a preload force that presses the bus bar, the contact ring, the second contact ring, and the bus bar together.

According to a further embodiment, the outer housing can comprise at least one displacement opening through which the collar of the housing extends, and the displacement opening can be a long hole whose longitudinal direction extends in the direction of displacement. The provision of a displacement opening in the outer housing represents an advantageous structural configuration in order to enable displaceability of the housing relative to the outer housing. Since the screw can be connected to the housing in a motion-transmitting manner, the screw as well can be displaceable relative to the outer housing. In this way, positional tolerances between two electrical modules to be connected can be compensated for. The configuration of the displacement opening as a long hole restricts the movability of the housing and therefore of the screw to the longitudinal direction of the long hole.

The outer housing can preferably also comprise two displacement openings spaced from one another in the direction of displacement through which a collar of the housing extending in the direction of displacement extends.

In the following, the invention shall be explained in more detail by using embodiments with reference to the appended drawings. Individual features that are present in the following embodiment can then be omitted if, according to the above embodiments, the technical effect associated with this feature is not important. Conversely, a feature described above but not present in an embodiment below can be added to the embodiment if the technical effect associated with this feature is important for a specific application.

The same reference characters are used below for elements that correspond to one another in terms of structure and/or function,
where:
- Fig. 1: shows a schematic perspective illustration of a contact assembly according to a possible embodiment;
- Fig. 2: shows a schematic sectional view of the contact assembly in the pre-assembly position according to a possible embodiment;
- Fig. 3: shows a schematic perspective detailed view of the locking projections according to a possible embodiment;
- Fig. 4: shows a schematic sectional view of the contact assembly and the second contact assembly during alignment according to a further possible embodiment;
- Fig. 5: shows a schematic perspective illustration of the second contact assembly according to a further possible embodiment.

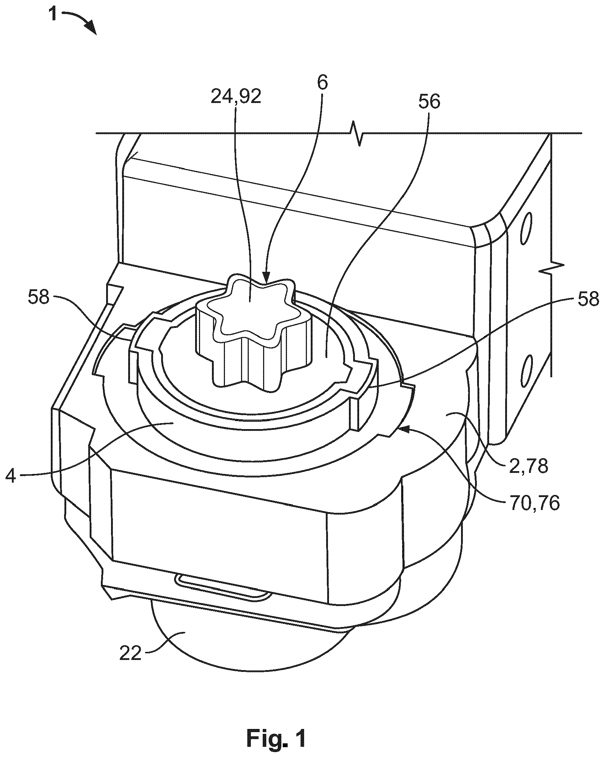

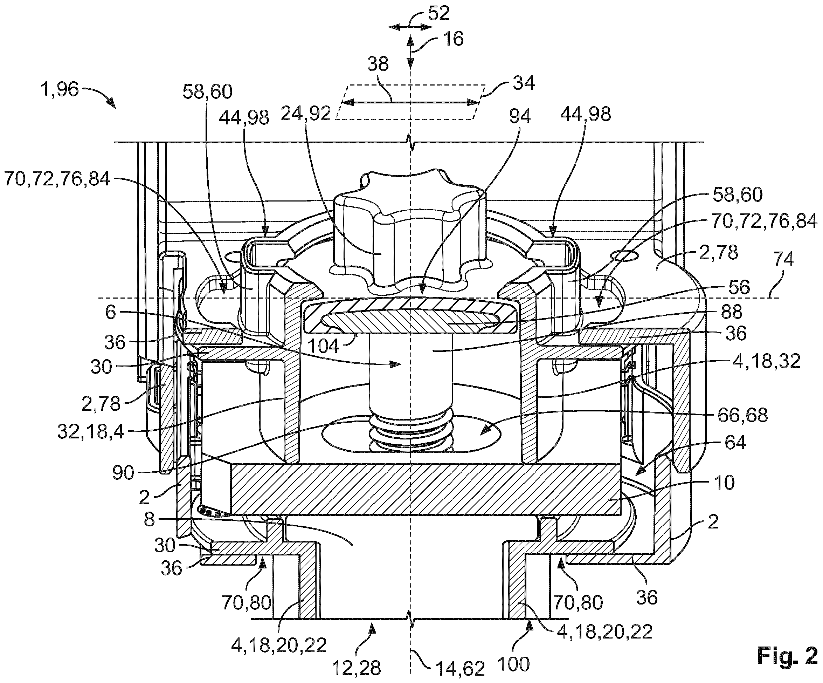

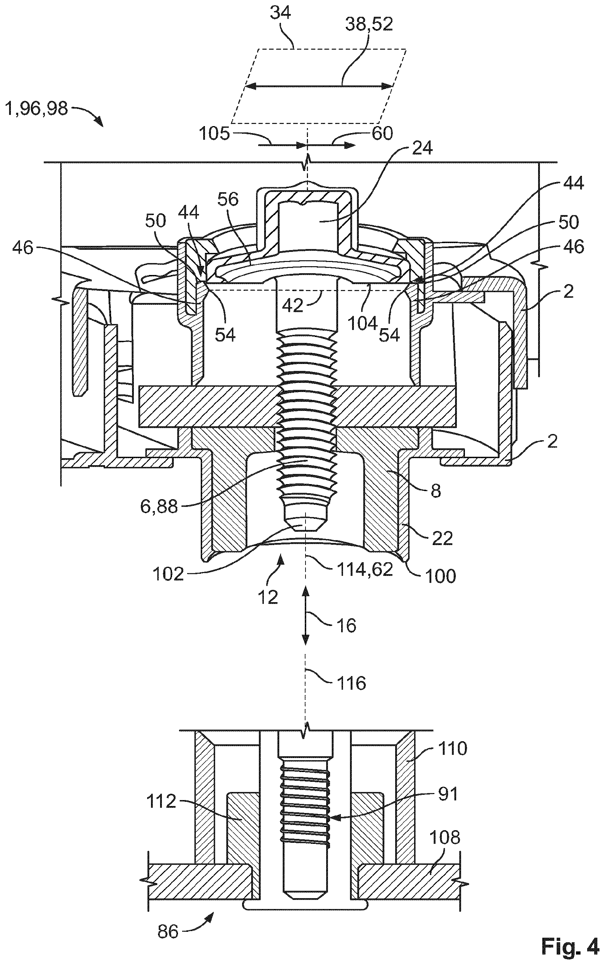

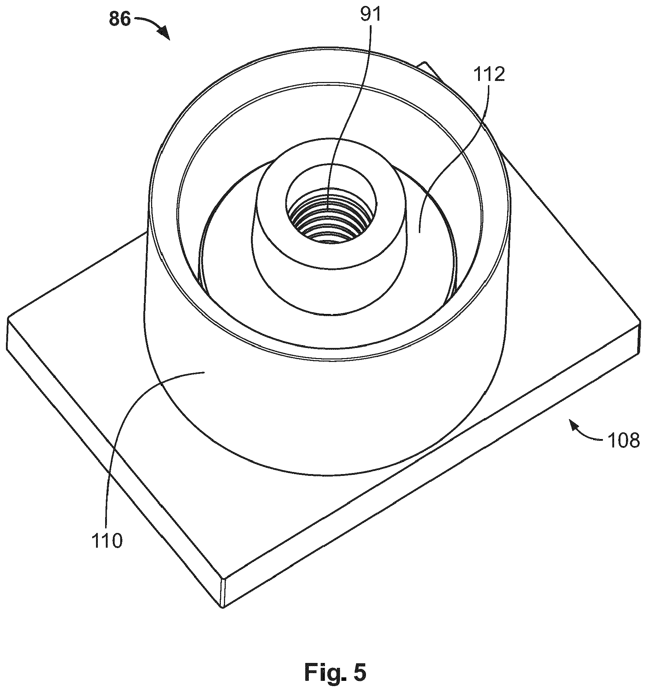

The structure and function of the housing assembly shall first be described with reference to Figures 1 to 4. The assembly of the housing assembly shall be described thereafter with reference to Figures 4 and 5.

Housing assembly 1 comprises an outer housing 2, a housing 4, a screw 6, a contact ring 8, and a bus bar 10.

Housing 4 comprises a passage opening 12, longitudinal axis 14 of which extends along a direction of connection 16 through housing 4. Passage opening 12 is surrounded by a substantially cylindrical wall 18 which is arranged concentrically around direction of connection 16 or around a longitudinal axis 14 of passage opening 12, respectively. A lower part 20 of housing 4 comprises a collar 22 which projects on side 26 of housing 4 facing away from a screw head 24. In particular, passage opening 12 extends through collar 22, and collar 22 forms an end 28 of passage opening 12. Collar 22 concentrically surrounds substantially cylindrical contact ring 8.

Housing 4 also comprises at least one flange section 30 which projects vertically from housing 4. In the embodiment shown, an upper part 32 of housing 4 as well as collar 22 of lower part 20 of housing 4 comprise a flange section 30. Flange sections 30 run parallel to one another and to a displacement plane 34 which extends perpendicular to direction of connection 16. Flange sections 30 are substantially planar and configured to each abut in a displaceable manner against a section 36 of outer housing 2. In the embodiment shown, flange sections 30 are longer in a direction of displacement 38 than transverse to direction of displacement 38. Direction of displacement 38 extends along displacement plane 34.

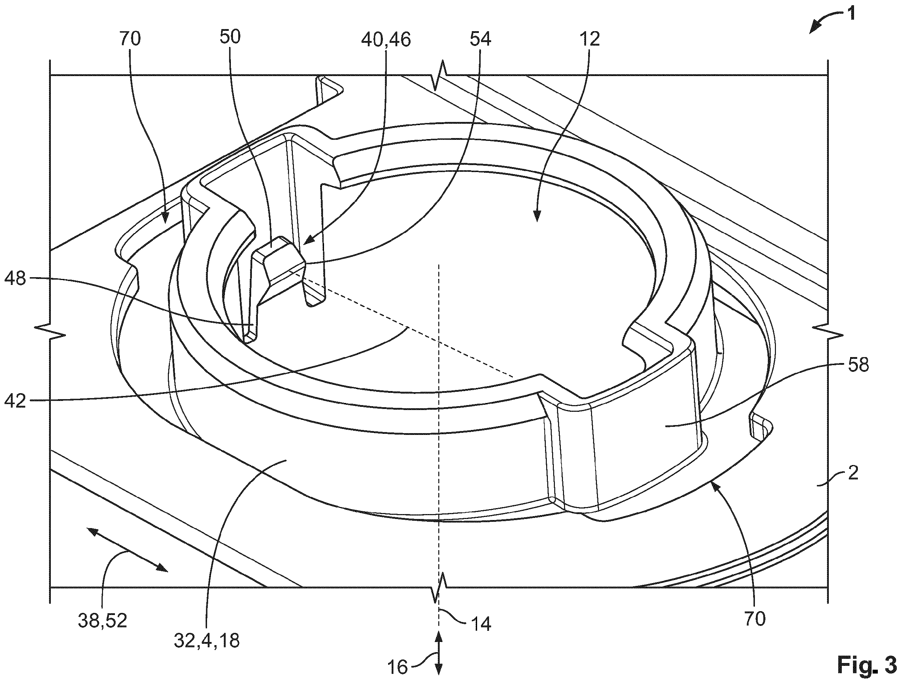

As can be clearly seen from Figures 3 and 4, upper part 32 of housing 4 comprises locking projections 40 which are disposed opposite one another relative to longitudinal axis 14 of passage opening 12 or relative to direction of connection 16, respectively. A connecting line 42 between locking projections 40 extends along direction of displacement 38. Locking projections 40 are configured to engage in a lock 44 with screw 6 extending through passage opening 12.

In the embodiment shown in Figure 3, locking projections 40 are configured as locking tongues 46 which extend from a foot 48 up to a free end 50. Feet 48 of locking tongues 46 are connected to upper part 32 of housing 4 or to wall 18, where the connection is preferably monolithic. Locking tongues 46 can be resiliently deflected in a radial direction 52 which extends perpendicular to direction of connection 16. Locking tongues 46 comprise a locking tab 54 at their free ends. Locking tabs 54 are configured to abut against a screw flange 56 of screw 6.

Upper part 32 of housing 4 comprises pockets 58 in which locking projections 40 or locking tongues 46 are received. Pockets 58 represent bulges 60 which extend in the radial direction outwardly 60 and along direction of connection 16 or along a longitudinal axis 62 of screw 6, respectively. Pockets 58 can also be formed by wall 18 of passage opening 12. Pockets 58 are provided to protect locking projections 40 or locking tongues 46 from being touched by objects or fingers and thereby prevent damage.

Housing 4 is surrounded at least in part by outer housing 2. Outer housing 2 comprises a bus bar receptacle 64 in which bus bar 10 is received perpendicular to direction of connection 16. Bus bar 10 comprises a passage opening 66 which represents a long hole 68 in the illustrated embodiment.

Outer housing 2 comprises displacement openings 70 which are disposed opposite one another with respect to displacement plane 34 and are spaced from one another in direction of displacement 38. A displacement opening 70 can be configured as a long hole 72, longitudinal direction 74 of which extends along direction of displacement 38. Upper part 32 of housing 4 extends along direction of connection 16 through displacement opening 76 of an upper outer housing member 78, and collar 22 of lower part 20 of housing 4 extends along direction of connection 16 through displacement opening 80 of a lower outer housing member 82.

Displacement opening 76 of upper outer housing member 78 in relation to direction of connection 16 comprises oppositely disposed recesses 84 which are curved to be complementary to pockets 58 of upper part 32 of housing 4. In this way, pockets 58 of housing 4 can be received by recesses 84 of upper outer housing member 78 when housing 4 is displaced along direction of displacement 38.

Regardless of how housing 4 is displaced relative to outer housing 2 along displacement plane 34 or direction of displacement 38, respectively, both displacement openings 76, 80 are closed in a touch-safe manner. In particular, displacement opening 76 of upper outer housing member 78 is closed by screw flange 56 and flange section 3 of upper part 32 of housing 4.

Screw 6 is provided for connecting housing assembly 1 to a second housing assembly 86 (see Figure 4). Screw 6 is arranged in passage opening 12 such that longitudinal axis 62 of screw 6 extends along longitudinal axis 14 of passage opening 12 or along direction of connection 16, respectively. Screw 6 comprises a screw shank 88, screw head 24, and screw flange 56. Screw shank 88 provides an external thread 90 which is configured to engage with a complementary internal thread 91 of second housing assembly 86.

Screw head 24 protrudes from housing 4 in direction of connection 16 and comprises a cap 92 which is preferably manufactured from insulating material. Screw flange 56 is arranged at an end 94 of screw head 24 facing external thread 90 and extends in a rotationally symmetrical manner about longitudinal axis 62 of screw 6. Screw flange 56 is part of the protection against contact and is preferably manufactured from insulating material.

In a pre-assembly position 96, screw 6 is locked in passage opening 12 so that screw 6 is held in an upper position 98. In upper position 98, screw head 24 is spaced as far as possible from end 100 of collar 22 of lower part 20 of housing 4 facing away from screw head 24. In pre-assembly position 96, an end 102 of screw 6 facing away from screw head 24 does not protrude in direction of connection 16 at end 100 of collar 22 facing away from screw head 24.

Lock 44 of screw 6 in passage opening 12 is realized in the embodiment shown in Figure 4 in that an underside 104 of screw flange 56 rests upon free ends 50 of locking projections 40 which in radial direction 105 point inwardly. In particular, underside 104 of screw flange 56 can rest upon locking tabs 54 which are arranged on free ends 50 of locking tongues 46.

Screw 6 is mounted to be rotatable about longitudinal axis 62 of screw 6 relative to housing 4, to outer housing 2, to bus bar 10, and to contact ring 8 of housing assembly 1. In addition, screw 6 is connected to housing 4 in a motion-transmitting manner so that housing 4 together with screw 6 can be displaced relative to outer housing 2 in direction of displacement 38. If housing assembly 1 comprises a bus bar 10, then housing 4 together with screw 6 can likewise be displaced relative to bus bar 10 in direction of displacement 38. In particular, housing 4 with screw 6 can be displaceable relative to outer housing 2 along displacement plane 34. If housing assembly 1 comprises a bus bar 10 with a long hole 68, then housing 4 together with screw 6 can only be displaced along a longitudinal axis 106 of long hole 68.

It is described hereafter with reference to Figures 4 and 5 how housing assembly 1 is assembled with a second housing assembly 86.

Second housing assembly 86 comprises a housing 108 with a collar 110 which is configured to be complementary to passage opening 12 of housing assembly 1 Collar 110 of second housing assembly 86 is configured such that it can be plugged together with collar 22 of housing assembly 1. A contact ring 112 is received in collar 110 of the housing of second housing assembly 86. Contact ring 112 of second housing assembly 86 is provided to come into electrically conductive contact with contact ring 8 of housing assembly 1.

At the beginning of the assembly, screw 6 of housing assembly 1 is in the pre-assembly position 96. In pre-assembly position 96, screw 6 is locked in passage opening 12. Screw 6 is held in upper position 98, so that end 102 of screw 6 facing away from screw head 24 does not protrude along direction of connection 16 at end 100 of collar 22 of housing assembly 1 facing away from screw head 24. In this way, end 102 of screw 6 facing away from screw head 24 is prevented from coming into contact with contact ring 112 or collar 110 of second housing assembly 86 before housing assembly 1 is aligned relative to second housing assembly 86 or before housing assembly 1 is plugged together with second housing assembly 86, respectively. This prevents damage to contact ring 112 or to collar 110 of second housing assembly 86.

In the first assembly step, housing assembly 1 is aligned relative to second housing assembly 86. For this purpose, collar 22 of housing assembly 1 is displaced along displacement plane 34 or along direction of displacement 38 until a longitudinal axis 114 of collar 22 of housing assembly 1 extends along a longitudinal axis 116 of collar 110 of second housing assembly 86.

If collar 22 of housing assembly 1 is aligned relative to collar 110 of second housing assembly 86, then screw 6 of housing assembly 1 is also aligned to fit. Longitudinal axis 62 of screw 6 therefore extends along longitudinal axis 114 of collar 22 of housing assembly 1 and along longitudinal axis 116 of collar 110 of second housing assembly 86.

Screw 6 is therefore aligned together with collar 22 of housing assembly 1 and collar 110 of second housing assembly 86 to fit because all movable parts of housing assembly 1 are connected to one another in a motion-transmitting manner. If collar 22 of housing assembly 1 is displaced along direction of displacement 38 or along displacement plane 34 during alignment, then the motion of collar 22 continues onto contact ring 8 of housing assembly 1 because contact ring 8 is inserted into collar 22 of housing assembly 1. As a result, contact ring 8 transmits the motion along direction of displacement 38 or along displacement plane 34 to screw shank 88 because the latter extends at least in part in direction of connection 16 through contact ring 8. The motion of screw 6 along direction of displacement 38 or along displacement plane 34 is in turn transmitted to upper part 32 of housing 4, whereby the latter also moves along direction of displacement 38 or along displacement plane 38, respectively.

Once the alignment process has been completed, housing assembly 1 and second housing assembly 86 can be plugged together along direction of connection 16. Collar 22 of first housing assembly 1 is placed over collar 110 of second housing assembly 86, or collar 22 of first housing assembly 1 is inserted into collar 110 of second housing assembly 86.

After housing assembly 1 and second housing assembly 86 have been aligned and plugged together, there is no longer any danger that an end 102 of screw 6 facing away from screw head 24 can damage contact ring 112 or collar 110 of second housing assembly 86. The pre-assembly position 96 of screw 6 can therefore be cancelled.

For this purpose, lock 44 of screw 6 in passage opening 12 is released. Screw 6 is there pressed along its longitudinal axis 62 or along direction of connection 16 in the direction of second housing assembly 86, whereby locking tongues 46 are resiliently deflected in the radial direction outwardly 60 by underside 104 of screw flange 56. In particular, free ends 50 of locking tongues 46 are deflected resiliently in the radial direction outwardly 60. As soon as screw flange 56 has overcome free ends 50 of locking tongues 46 or locking tabs 54 disposed at free ends 50 of locking tongues 46 along direction of connection 16, screw flange 56 is no longer held by locking tongues 46. This releases lock 44 of screw 6 in passage opening 12, whereby screw 6 slips along direction of connection 16 and in the direction of second housing assembly 86 into passage opening 12. At the same time, locking tongues 46, which are deflected resiliently in the radial direction outwardly 60, snap back in the radial direction inwardly 105. This can prevent screw 6 from dropping out of housing assembly 1.

After the plugging process, contact ring 8 of housing assembly 1 and contact ring 112 of second housing assembly 86 lie on top of one another in an electrically conductive manner. In particular, bus bar 10 of housing assembly 1 can be connected in an electrically conductively manner to a bus bar of second housing assembly 86. Screw 6 protrudes through contact ring 8 of the housing assembly and contact ring 112 of second housing assembly 86. Furthermore, screw 6 can also protrude through the bus bar (not shown) of second housing assembly 86.

In a final assembly step, screw 6 is fastened. Screw 6 generates a preload force that compresses bus bar 10 and contact ring 8 of housing assembly 1 as well as bus bar 118 and contact ring 112 of second housing assembly 86 along longitudinal axis 62 of screw 6. In this way, the current-carrying components of housing assembly 1 and second housing assembly 86 are electrically connected to one another and the assembly is completed.

In this state, all current-carrying components of housing assembly 1 and second housing assembly 86 are surrounded without a gap by non-conducting components. In this way, complete protection against contact is guaranteed. In particular, contact of a human finger or objects with current-carrying components is prevented.

### Reference Numerals

- 1: housing assembly
- 2: outer housing
- 4: housing
- 6: screw
- 8: contact ring
- 10: bus bar
- 12: passage opening
- 14: longitudinal axis of the passage opening
- 16: direction of connection
- 18: wall
- 20: lower part of the housing
- 22: collar
- 24: screw head
- 26: side of the housing facing away from the screw head
- 28: end of the passage opening
- 30: flange section
- 32: upper part of the housing
- 34: displacement plane
- 36: section of the outer housing
- 38: direction of displacement
- 40: locking projection
- 42: connecting line
- 44: lock
- 46: locking tongue
- 48: foot
- 50: free end
- 52: radial direction
- 54: locking tab
- 56: screw flange
- 58: pocket
- 60: radial direction outwardly
- 62: longitudinal axis of the screw
- 64: bus bar receptacle
- 66: passage opening of the bus bar
- 68: long hole of the bus bar
- 70: displacement opening
- 72: long hole of the displacement opening
- 74: longitudinal direction of the long hole of the displacement opening
- 76: displacement opening of the upper outer housing member
- 78: upper outer housing member
- 80: displacement opening of the lower outer housing member
- 82: lower outer housing member
- 84: recesses
- 86: second housing assembly
- 88: screw shank
- 90: external thread
- 91: internal thread of the second housing assembly
- 92: cap
- 94: end of the screw head facing the external thread
- 96: pre-assembly position
- 98: upper position
- 100: end of the collar facing away from the screw head
- 102: end of the screw facing away from the screw head
- 104: underside of the screw flange
- 105: radial direction inwardly
- 106: longitudinal axis of the long hole
- 108: housing of the second housing assembly
- 110: collar of the second housing assembly
- 112: Contact ring of the second housing assembly
- 114: longitudinal axis of the collar of the housing assembly
- 116: longitudinal axis of the collar of the second housing assembly

## Claims

1. Housing assembly (1) protected against contact for a module connector,
with a housing (4) which comprises a passage opening (12) extending through said housing (4) in a direction of connection (16), and
with a screw (6) having a screw head (24), said screw (6) being arranged in said passage opening (12),
wherein said screw (6) is locked in said passage opening (12) in a pre-assembly position (96).

2. Housing assembly (1) protected against contact according to claim 1,
wherein said screw head (24) comprises a screw flange (56) and is configured to be protected against contact and wherein said screw head (24) is locked in said passage opening (12).

3. Housing assembly (1) protected against contact according to claim 2, wherein said passage opening (12) is closed by said screw flange (56).

4. Housing assembly (1) protected against contact according to any one of claims 1 to 3, wherein said screw head (24) in said pre-assembly position (96) is disposed at one end (28) of said passage opening (12) and a screw shank (88) of said screw (6) extends through said passage opening (12).

5. Housing assembly (1) protected against contact according to any one of claims 1 to 4,
wherein said passage opening (12) comprises a locking projection (40) that projects in the radial direction inwardly (105).

6. Housing assembly (1) protected against contact according to any one of claims 1 to 5,
wherein said at least one locking projection (40) is formed by a locking tongue (46) which can be resiliently deflected in said radial direction (52).

7. Housing assembly (1) protected against contact according to any one of claims 1 to 6,
wherein said passage opening (12) comprises a wall (18) that comprises a pocket (58) which is offset in the radial direction outwardly (60) and in which a locking projection (40) is received.

8. Housing assembly (1) protected against contact according to any one of claims 1 to 7,
wherein said housing (4) comprises a collar (22) which surrounds said passage opening (12) and projects on the side of said housing (4) facing away from said screw head (24), and
wherein said screw (6) does not protrude from said collar (22) in said pre-assembly position (96).

9. Housing assembly (1) protected against contact according to any one of claims 1 to 8,
wherein at least two locking projections (40) which are disposed diametrically opposite one another with respect to said direction of connection (16) are present.

10. Housing assembly (1) protected against contact according to any one of claims 1 to 9,
with an outer housing (2) in which said housing (4) is received to be displaceable in at least one direction of displacement (38) that is disposed in a plane (34) perpendicular to said direction of connection (16).

11. Housing assembly (1) protected against contact according to claim 9 and 10, wherein two locking projections (40) disposed diametrically opposite one another are spaced from one another in said direction of displacement (38).

12. Housing assembly (1) protected against contact according to claim 10 or 11,
wherein said outer housing (2) comprises a bus bar receptacle (64) in which a bus bar (10) can be received substantially perpendicular to said direction of connection (16), wherein said bus bar receptacle (64) penetrates said passage opening (12).

13. Housing assembly (1) protected against contact according to any one of claims 1 to 12,
wherein said housing (4) comprises a collar (22) through which said passage opening (12) extends.

14. Housing assembly (1) protected against contact according to claim 13, wherein said screw head (24) is locked in said collar (22).

15. Housing assembly (1) protected against contact according to any one of claims 10 to 14,
wherein said outer housing (2) comprises at least one displacement opening (70, 76, 80) through which said collar (22) of said housing (4) extends,
and wherein said displacement opening (70, 76, 80) is a long hole (72), the longitudinal direction (74) of which extends in said direction of displacement (38).
